# EUROPÄISCHE PATENTANMELDUNG

(11) **EP 0 864 859 A1**
(43) Veröffentlichungstag der Anmeldung: **16.09.1998**
(21) Anmeldenummer: 98103371.5
(22) Anmeldetag: 26.02.1998
(51) Int. Cl.: G01N 27/403, F15B 13/00, G01N 35/08, F16K 27/00

(54) **Modularer steuerblock für die Analysentechnik**

(30) Priorität: 03.03.1997 DE 29703788 U
(71) Anmelder: Bürkert Werke GmbH & Co., D-74653 Ingelfingen (DE)
(72) Erfinder: Hettinger, Christoph, 74653 Ingelfingen (DE)
(74) Vertreter: Degwert, Hartmut, Dipl.-Phys.

(57) **Zusammenfassung**

Ein modularer Steuerblock für die Analysentechnik weist mehrere Einzelelemente (2, 5, 15, 19, 20) mit jeweils wenigstens einem Kanal für den Zu- und Abfluß von Medien auf, die durch geeignete Verbindungsstellen miteinander verbindbar sind. Zur Verringerung der Herstellungskosten des Steuerblocks weisen alle Einzelelemente (2, 5, 15, 19, 20) die gleiche Außenkontur auf und können in Reihe oder versetzt angeordnet werden, wobei unterschiedliche Funktionsweisen des Steuerblocks durch in Reihe angeordnete, versetzt angeordnete Einzelelemente (2, 5, 15, 19, 20) oder durch beliebige Kombination von in Reihe und versetzt angeordneten Einzelelementen (2, 5, 15, 19, 20) entstehen.

## Beschreibung

Die Erfindung betrifft einen modularen Steuerblock für den Einsatz in der Analysentechnik. Insbesondere betrifft die Erfindung den konstruktiven Aufbau eines Steuerblocks, dessen Funktionsweise durch einfache Änderung der Aneinanderreihung der einzelnen Module unterschiedliche Steuerfunktionen, wie z.B. Dosieren, Verteilen, Mischen bzw. eine Waschfunktion oder eine beliebige Kombination dieser Steuerfunktionen annehmen kann.

Derartige Steuerblöcke in modularer Bauweise - jeweils bestückt mit Ventilen - werden in anderen Bereichen der Steuer- und Regeltechnik, z.B. in der Pneumatik, bereits erfolgreich eingesetzt. Im Baukastensystem zusammengesetzt ermöglichen sie eine sehr große Flexibilität, durch die gleichzeitige Standardisierung der Teile wird eine kostensparende Produktion und Lagerhaltung erreicht.

In der Analysentechnik gibt es wegen den vielfältigen Anwendungen und komplexen Verschaltungsarten sowie den hohen Anforderungen, die chemische Beständigkeit, Totraumarmut, Spaltarmut und internes Volumen betreffen, bislang keine Standardisierung, was die Art und Weise betrifft, wie Ventile verschaltet werden und was die dabei eingesetzten Komponenten anbelangt.

Für die Analysentechnik werden in herkömmlicher Weise Steuerblöcke derart hergestellt, daß mehrere Ventile miteinander verschaltet werden, um die gewünschten Funktionen zu erhalten. Zu diesem Zweck werden mechanisch bearbeitete, auf die spezielle Anforderung zugeschnittene Steuerblöcke gefertigt, auf die Ventile z.B. aufgeflanscht werden. Auf diese Weise entstehen starre und kostenaufwendige Steuerblöcke, die für jeden Anwendungsfall einzeln konzipiert und realisiert werden müssen.

Ferner können bei einem in herkömmlicher Weise hergestellter Steuerblock für die Analysentechnik Sensoren zur Überwachung des Mediums, z.B. zur Durchflußmessung, nachträglich nur unter hohem Kosten- und Änderungsaufwand integriert werden. Meist werden Sensoren dem Steuerblock vor- bzw. nachgeschaltet; dadurch werden internes Volumen und Totvolumen erhöht.

Als nachteilig hat sich bei herkömmlichen Steuerblöcken für die Analysentechnik herausgestellt, daß in herkömmlichen Verbindungsstellen zwischen den Einzelelementen eines Ventilblocks vorzugsweise O-Ringe verwendet werden, bei denen Toträume und Spalte an den Verbindungsstellen nicht völlig vermeidbar sind.

Eine bessere Lösung stellen Profil-O-Ringe oder spezielle Formdichtungen dar, diese sind jedoch sehr teuer.

Es ist daher Aufgabe der Erfindung, die Steuerblöcke für die Analysentechnik derart zu verbessern, daS sowohl spezielle Kundenwünsche realisierbar werden, als auch eine Standardisierung der Blöcke ertolgt, die niedrige Herstellungskosten durch die Produktion in großen Stückzahlen ermöglicht. Darüber hinaus sind erfindungsgemaß die Elemente derart abänderbar, daß nach Bedarf Sensoren totraum- und spaltfrei eingebaut werden können. Diese Sensoren dienen z.B. dazu, festzustellen, ob ein Durchfluß in bestimmten Kanälen vorhanden ist und das Ergebnis an eine Auswerteelektronik weiterzugeben.

Erfindungsgemäß ist hierzu ein modularer Steuerblock für die Analysentechnik mit mehreren Einzelelementen vorgesehen, die jeweils wenigstens einen Kanal für den Zu- und Abfluß von Medien enthalten und durch geeignete Verbindungsstellen miteinander verbindbar sind, bei dem die Einzelelemente alle die gleiche Außenkontur aufweisen und in Reihe oder versetzt angeordnet werden können, wobei unterschiedliche Funktionsweisen des Steuerblocks durch in Reihe angeordnete, versetzt angeordnete Einzelelemente oder durch beliebige Kombination von in Reihe und versetzt angeordneten Einzelelementen entstehen.

Die einzelnen Komponenten des erfindungsgemäßen modularen Steuerblocks haben den Vorteil, daß für alle Elemente die Außenkontur und die Lage der Hauptkanäle identisch ist. Im Falle der vorliegenden Erfindung werden Einzelelemente eingesetzt, die auf unterschiedliche Weise aneinandergereiht werden. Dabei ist das Anreihmaß der Ventile und Sensorausgänge derart ausgelegt, daß sich Ein- und Ausgänge mit in der Pneumatik üblichen elektrischen Sammelschienen ansteuern lassen. In einer bevorzugten Ausführungsform wird der Steuerblock durch einen Multipolstecker oder einen Feldbus angesteuert.

Die Anordnung der Elemente kann je nach Anwendungsfall auf unterschiedliche Weise erfolgen. Werden die Elemente z.B. ohne Vorsatz in Reihe angeordnet, werden Funktionen realisiert, bei denen das Medium in einem gemeinsamen Kanal fließt oder aus einem gemeinsamen Kanal entnommen wird. Mit einer versetzten Aneinanderreihung entstehen hingegen Funktionen, bei denen das Medium nacheinander durch die Elemente fließt. Auch eine Kombination aus sich in Reihe befindlichen Elementen mit versetzt angeordneten Elementen ist ausführbar. Die versetzte Anordnung wird dadurch ermöglicht daß die Anschlußbohrungen in den Einzelelementen auf gleicher Höhe liegen. Im Falle der vorliegenden Erfindung entsteht eine Vielzahl von Mehrfachanordnungen zur Realisierung komplexer Steuerfunktionen durch beliebige Kombination von in Reihe und versetzt angeordneten Elementen.

In Weiterbildung der Erfindung ist der wenigstens eine Kanal durch eine Steuerbohrung gebildet, und bei unterschiedlichen Einzelelementen differiert die Tiefe der Steuerbohrungen. Die Lage der Steuerbohrungen, d.h. der Hauptkanäle ist für alle Elemente identisch, lediglich die Tiefe der Steuerbohrungen variiert je nach Funktion des Elements. Durch diese Maßnahme wird erreicht, das Einzelelement als preiswertes Spritzgußteil herzustellen. Für die verschiedenen Varianten muß nur eine einzige Spritzgußform angefertigt werden. Modifikationen entstehen beispielsweise durch einfaches Austauschen von auswechselbaren Schiebern in der Spritzgußform.

Vorteilhaft ist ferner, daß in jedem erfindungsgemäßen Einzelelement ein Sensor eingebaut werden kann, z.B. zur Durchflußoder Temperaturmessung. Um den Sensor totraum- und spaltfrei einzusetzen, enthalt jedes Element eine oder mehrere konische Sacklochbohrungen, die zum Hauptkanal hin enger werden und von diesem durch eine dünne Werkstoffschicht getrennt sind. Diese dünne Schicht wird erst beim Einbau eines Sensors durchstoßen.

Der Sensor wird im Falle der vorliegenden Erfindung in eine Hülse aus Elastomerwerkstoff gesteckt und mit dieser zusammen in die durchgebrochene konische Bohrung eingeschoben. Diese konische Bohrung dient erfindungsgemäß dazu, die Baugruppe, bestehend aus Hülse und Sensor, derart festzuhalten, daß diese selbsthemmend im Gehäuse verbleibt. Die Anpresskraft der Hülse ist im vorderen Bereich, in dem der Sensor aus der Hülse in den Kanal ragt, maximal; dadurch wird eine totraum- und spaltfreie Abdichtung des Sensorelements erreicht. Der Sensor wird von dem Medium umspült. Der Bereich der elektrischen Zuleitungen wird zur Gewährleistung der elektrischen Sicherheit in einer bevorzugten Ausführungsform mit Gießharz vergossen. In einer weiteren Ausführung wird dieser Bereich mit einem Klemmelement gesichert. Hierdurch wird ausgeschlossen, daß sich die Position des eingebauten Sensors ändert.

Um auf einfache Art eine spätere Nachrüstung des modularen Ventilblocks mit Sensoren, z.B. Drucksensoren, zu ermöglichen, ist erfindungsgemäß ein spezielles Element für Sensoren vorgesehen, das ohne Veränderung des modularen Steuerblocks nachgerüstet werden kann. Dieses Element wird in einfacher Weise anstelle des Anschlußnippels an ein bestehendes Einzelelement angeflanscht. Aufgrund der vorgeschlagenen Anordnung ist auch in diesem Fall das Gehäuse und der Sensor derart aufgebaut daß am Sensor keine Toträume oder Spalte entstehen, die beim Vorbeiströmen des Mediums zu Ablagerungen führen könnten.

In der vorliegenden Erfindung erhält man totraumfreie Übergänge dadurch, daß Vertiefungen zur Aufnahme von Dichtelementen vorgesehen sind, die einen kegelig ausgeführten Boden besitzen. Dadurch wird erreicht, daß das Dichtelement - vorzugsweise eine Rechteckdichtung - zum medienführenden Kanal hin eine stärkere Pressung erfährt als auf der dem Medium abgewandten Seite. Auf diese Weise wird die Verbindungsstelle hermetisch, totraum- und spaltfrei abgedichtet. Die Verwendung von teuren Formdichtungen entfällt; die Rechteckdichtungen können aus nahezu jedem Dichtmaterial preisgünstig hergestellt werden.

Die Erfindung ist anhand von in der Zeichnung dargestellten Ausführungsbeispielen in der nachfolgenden Beschreibung näher erläutert. Es zeigen:
Figur 1: eine schematische Darstellung der Anordnung der Einzelelemente für die Anwendungsfälle "Verteilen" und "Spülen".
Figur 2: eine schematische Darstellung der Anordnung der Einzelelemente für die Anwendungsfälle "Mischen" und "Spülen".
Figur 3: eine Schnittdarstellung durch die Verbindungsstelle zwischen den Elementen.
Figur 4: eine Schnittdarstellung durch die Bohrung eines Elements mit einem eingebauten Sensor.
Figur 5: eine Schnittdarstellung durch das Nachrüstelement mit Sensor.

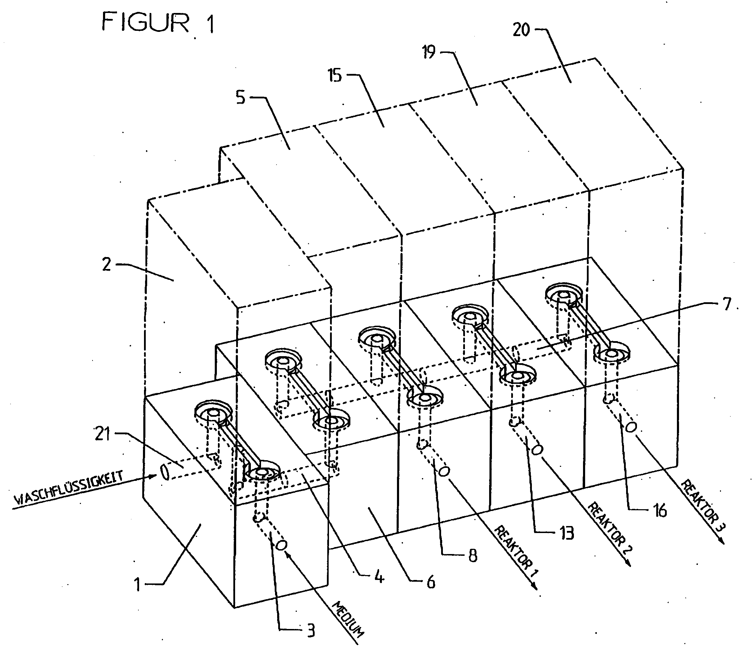

Figur 1 zeigt die Anwendungsbeispiele "Verteilen" und "Spülen". Im Anwendungsfall "Verteilen" öffnet das 3/2-Wegeventil (2) im linken Element (1) den Zuflußkanal (3) für das Medium und leitet dieses über die Mittelbohrung (4) in das 2/2-Wegeventil (5) des zweiten Elements (6). Ist das Ventil (5) in diesem Element (6) geöffnet, gelangt das Medium in den Hauptkanal (7) und kann von dort durch Öffnen der 2/2-Wegeventile (15, 19, 20) über die Zuleitungskanäle (8, 13, 16) zu den in der Zeichnung nicht dargestellten Rektoren geleitet werden.

Beim Spülvorgang wird der Zufluß des Mediums zum Hauptkanal (7) durch das 3/2-Wegeventil (2) unterbrochen. Gleichzeitig geben das 3/2-Wegeventil (2) und das 2/2-Wegeventil (5) den Zulauf der Waschflüssigkeit durch den Kanal (21) über die Mittelbohrung (4) in den Hauptkanal (7) frei. Vom Hauptkanal (7) gelangt die Waschflüssigkeit über die Ventile (15, 19, 20) in die Zuleitungskanäle (8, 13, 16) zu den Reaktoren.

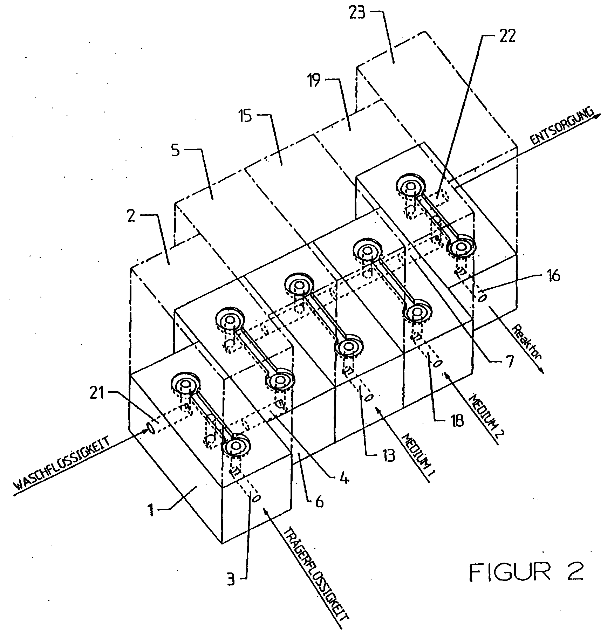

Figur 2 zeigt die Verknüpfung der Elemente, die die Funktion "Mischen" von zwei Medien oder die Funktion "Spülen" ermöglicht.

Zum Mischen sperrt das 3/2-Wegeventil (2) im linken Element (1) den Zufluß der Waschflüssigkeit aus dem Kanal (21) und laßt eine Trägerflüssigkeit vom Kanal (3) über die Mittelbohrung (4) fließen. Öffnet das 2/2-Wegeventil (5) im zweiten Element (6), gelangt die Trägerflüssigkeit in den Hauptkanal (7). Gleichzeitig fließt von den Kanälen (13, 18) durch die 2/2-Wegeventile (15, 19) Medium 1 und Medium 2 in den Hauptkanal (7) und wird durch das 3/2-Wegeventil (23), dessen Schaltstellung den Kanal zum Reaktor (16) öffnet, diesem zugeleitet.

In der Funktion "Spülen" schließen die 2/2-Wegeventile (15) und (19) und das 3/2-Wegeventil (23) trennt den Zufluß des Mediengemisches vom Hauptkanal (7) zum Rektorkanal (16) und gibt den Weg zum Entsorgungskanal (22) frei. Das 3/2-Wegeventil (2) des linken Elements schließt den Kanal für die Trägerflüssigkeit (3) und Laßt Waschflüssigkeit vom Zufluß (21) durch die Mittelbohrung (4) und das 2/2-Wegeventil (5) in den Hauptkanal (7). Von dort gelangt die Waschflüssigkeit durch das 3/2-Wegeventil (23) in den Entsorgungskanal (22).

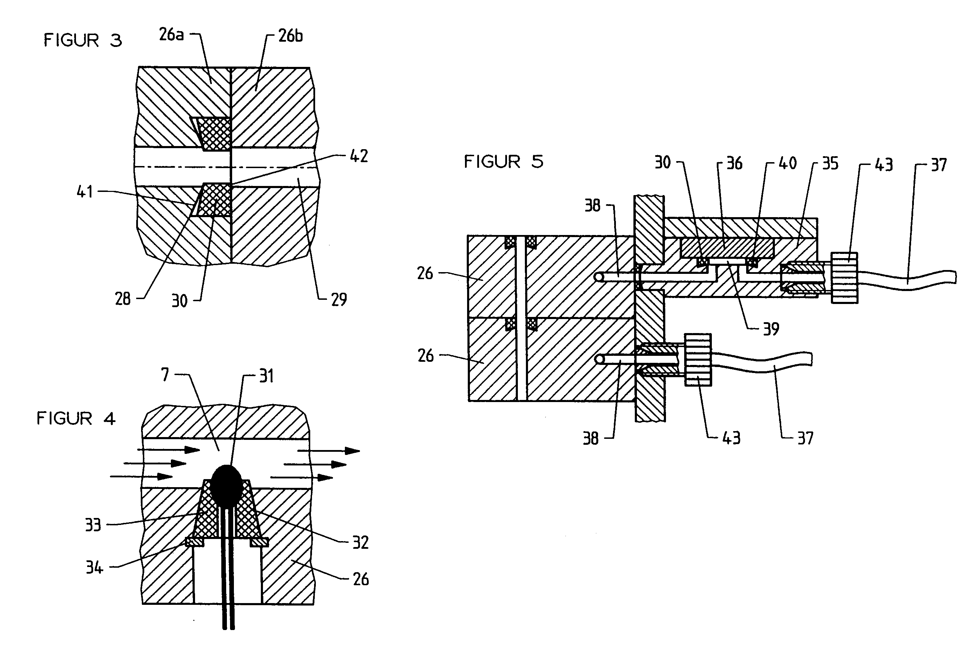

Figur 3 zeigt die totraum- und spaltfreie Dichtung zwischen den Einzelelementen (26a, 26b). Die Aussparung (28) hat einen kegelig ausgeführten Boden (41), der für eine maximale Dichtwirkung der vorzugsweise rechteckig ausgebildeten Dichtelemente (30) nach innen zum mediumsführenden Kanal (29) hin sorgt und dadurch einen spaltfreien Übergang (42) zwischen den Einzelelementen (26) ermöglicht.

In Figur 4 ist das Beispiel eines Sensors (31) dargestellt der in eine konische Bohrung (32) des Einzelelementes (26) eingebaut ist und in den Hauptkanal (7) totraum- und spaltfrei hineinragt. Der Sensor (31) steckt in einer Hülse (33) und wird mit dieser in der konischen Bohrung (32) selbsthemmend oder mittels eines Klemmelements (34) festgehalten.

Figur 5 zeigt eine bevorzugte Ausführungsform des Zusatzelementes (35) zum Nachrüsten eines Sensors am Beispiel eines Drucksensors (36). Das Element (35) wird anstelle des Anschlußnippels (43) für die Versorgungsleitungen (37) an ein Element (26) angeflanscht. Das Medium fließt vom bzw. zum Kanal (38) des Elements (26) in den Kanal (39) des Sensorelements (35) vorzugsweise an einem Drucksensor (36) vorbei, dessen Abdichtung durch eine kegelige Gestaltung der Aussparung (40) und eine Rechteckdichtung (30) wie in Figur 3 beschrieben totraum- und spaltfrei erfolgt.

## Patentansprüche

1. Modularer Steuerblock für die Analysentechnik, mit mehreren Einzelelementen, die jeweils wenigstens einen Kanal für den Zu- und Abfluß von Medien enthalten und durch geeignete Verbindungsstellen miteinander verbindbar sind, dadurch gekennzeichnet, daß die Einzelelemente (26) alle die gleiche Außenkontur aufweisen und in Reihe oder versetzt angeordnet werden können, wobei unterschiedliche Funktionsweisen des Steuerblocks durch in Reihe angeordnete, versetzt angeordnete Einzelelemente (26) oder durch beliebige Kombination von in Reihe und versetzt angeordneten Einzelelementen (26) herstellbar sind.

2. Modularer Steuerblock für die Analysentechnik nach Anspruch 1, dadurch gekennzeichnet daß der wenigstens eine Kanal durch eine Steuerbohrung gebildet ist und bei unterschiedlichen Einzelelementen die Tiefe der Steuerbohrungen differiert.

3. Modularer Steuerblock für die Analysentechnik nach Anspruch 1 oder 2, dadurch gekennzeichnet, daß in wenigstens einem Einzelelement (26) eine konische Bohrung vorgesehen ist, die von einem Hauptkanal (7) durch eine dünne Werkstoffschicht getrennt ist und die vor dem Einbau eines Sensors (31) durchstoßen wird.

4. Modularer Steuerblock für die Analysentechnik nach Anspruch 3, dadurch gekennzeichnet, daß eine Baugruppe, bestehend aus einem Sensor (31) in einer Hülse (33), in der konischen Bohrung (32) selbsthemmend festsitzt.

5. Modularer Steuerblock für die Analysentechnik nach Anspruch 3 oder 4, dadurch gekennzeichnet, daß eine Baugruppe, bestehend aus einem Sensor (31) in einer Hülse (33), in der konischen Bohrung (32) durch ein Klemmelement (34) gesichert ist.

6. Modularer Steuerblock für die Analysentechnik nach Anspruch 4 oder 5, dadurch gekennzeichnet, daß eine Preßkraft zwischen der Hülse (33) und der konischen Bohrung (32) in dem dem Hauptkanal zugewandten Bereich (7) am größten ist.

7. Modularer Steuerblock für die Analysentechnik nach einem der Ansprüche 3 bis 6, dadurch gekennzeichnet, daß der Sensor (31) totraum- und spaltfrei in den Hauptkanal (7) ragt.

8. Modularer Steuerblock für die Analysentechnik nach einem der vorstehenden Ansprüche, dadurch gekennzeichnet, daß ein separates Sensorelement (35) vorgesehen ist, das ohne Änderung der Einzelelemente (26) nachgerüstet werden kann.

9. Modularer Steuerblock für die Analysentechnik nach einem der vorstehenden Ansprüche, dadurch gekennzeichnet, daß Vertiefungen (28) zur Aufnahme von Dichtelementen (30) vorgesehen sind, die einen kegelig ausgeführten Boden (41) besitzen.

10. Modularer Steuerblock für die Analysentechnik nach einem der vorstehenden Ansprüche, dadurch gekennzeichnet, daß die Einzelelemente jeweils als Spritzgußteil ausgeführt sind.
